(19) Europäisches Patentamt / European Patent Office / Office européen des brevets

(11) **EP 3 705 340 A1**

(12) **EUROPEAN PATENT APPLICATION**
published in accordance with Art. 153(4) EPC

(43) Date of publication:
**09.09.2020 Bulletin 2020/37**

(51) Int Cl.:
**B60L 15/20** (2006.01)

(21) Application number: **18874023.7**

(22) Date of filing: **26.09.2018**

(86) International application number:
**PCT/JP2018/035668**

(87) International publication number:
**WO 2019/087622 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2017 JP 2017210045**

(71) Applicant: **Hitachi, Ltd.**
**Tokyo 100-8280 (JP)**

(72) Inventors:
• **ODA, Atsushi**
**Tokyo 100-8280 (JP)**
• **TOKUYAMA, Kazuo**
**Tokyo 100-8280 (JP)**

(74) Representative: **Mewburn Ellis LLP**
**Aurora Building**
**Counterslip**
**Bristol BS1 6BX (GB)**

(54) **VEHICLE INFORMATION CONTROL DEVICE AND VEHICLE INFORMATION CONTROL METHOD**

(57) Since device efficiency changes depending on variation between individual electric motors, the use histories thereof, and the like, there is a possibility that the device efficiency at a certain operation point has an actual value different from a previously measured value. Therefore, when control for maximizing the device efficiency is performed on the basis of the previously measured device efficiency, there is a possibility that an obtained energy-saving effect becomes less than an expected energy-saving effect. In order to deal with such problem, this vehicle information control device is provide with: an actual power consumption calculation unit for calculating, from an overhead line voltage and an overhead line current, an actual power consumption actually consumed by a vehicle; a theoretical power consumption calculation unit for calculating a theoretical power consumption of the vehicle from the tread force of the vehicle output by a vehicle drive device and the vehicle speed of the vehicle on the basis of a theoretical equation; a device efficiency calculation unit for calculating the device efficiency of the vehicle from the actual power consumption and the theoretical power consumption; and a device efficiency storage unit for holding the device efficiency.

FIG. 1

EP 3 705 340 A1

**Description**

Technical Field

The present invention relates to a vehicle information control device and a vehicle information control method of a railroad system.

Background Art

In recent years, further energy saving of a railroad system is demanded from an aspect of the protection of global environment. It is known that efficiency of a motor used for a railroad vehicle varies greatly depending on an operation point. Generally, when the load on a motor is small, there is a tendency for efficiency to become low. It is important for energy saving of the railroad system to operate a motor at an efficient operation point.

Patent Literature 1 discloses a technology of defining a running method which maximizes the device efficiency, taking the operation point of a motor into consideration. Specifically, it is a technology which enables the motor to operate at an efficiency point by running based on the running guidelines by providing: route condition storage means for storing route conditions, such as a curve, a gradient condition, and a speed limit; electric power generation means; electric power conversion means; efficiency calculation means for calculating device efficiency from the operating state of an AC motor; and efficiency optimization means for defining running guidelines maximizing the device efficiency under the route conditions.

Citation List

Patent Literature

PTL1: Japanese Patent Application Laid-Open No. 2010-88145

Summary of Invention

Technical Problem

The technology described in Patent Literature 1 uses, for the device efficiency, a device efficiency map holding values measured in advance in a factory under various conditions. However, since the device efficiency map changes depending on variation between individual motors, use histories thereof, and the like, there is a possibility that the device efficiency at a certain operation point has an actual value different from a previously measured value. Therefore, it is possible that the running guidelines in which the device efficiency is maximized are, in fact, not making use of the operation point at which the efficiency becomes highest. Thus, there was a problem that the obtained energy saving effect might be less than an expected energy-saving effect.

The present invention has been made in view of the above problems, and an object thereof is to obtain the expected energy-saving effect by creating a device efficiency map conforming to an actual environment.

Solution to Problem

In order to solve the above problem, a vehicle information control device according to the present invention includes: an actual power consumption calculation unit for calculating, from an overhead line voltage and an over head line current, an actual power consumption actually consumed by a vehicle; a theoretical power consumption calculation unit for calculating a theoretical power consumption of the vehicle from a tread force of the vehicle outputted by a drive device of the vehicle and a vehicle speed of the vehicle on the basis of a theoretical equation; a device efficiency calculation unit for calculating the device efficiency of the vehicle from the actual power consumption and the theoretical power consumption; and a device efficiency storage unit for storing the device efficiency.

Advantageous Effects of Invention

According to the present invention, by creating the device efficiency map conforming to an actual environment, the operation point of the motor can be changed to raise the device efficiency for further energy saving and to obtain the expected energy-saving effect.

Objects, configurations, and effects other than the above will become clear by the description of the embodiment below.

Brief Description of Drawings

Fig. 1 is a diagram showing one example of a configuration of a vehicle information control system according to an embodiment of the present invention;
Fig. 2 is a diagram explaining a concept of the device efficiency map according to the embodiment of the present invention; and
Fig. 3 is a diagram showing one example of a record data format according to the embodiment of the present invention.

Description of Embodiment

Hereafter, as one mode of carrying out the present invention, the embodiment will be described with reference to the drawings.

Embodiment

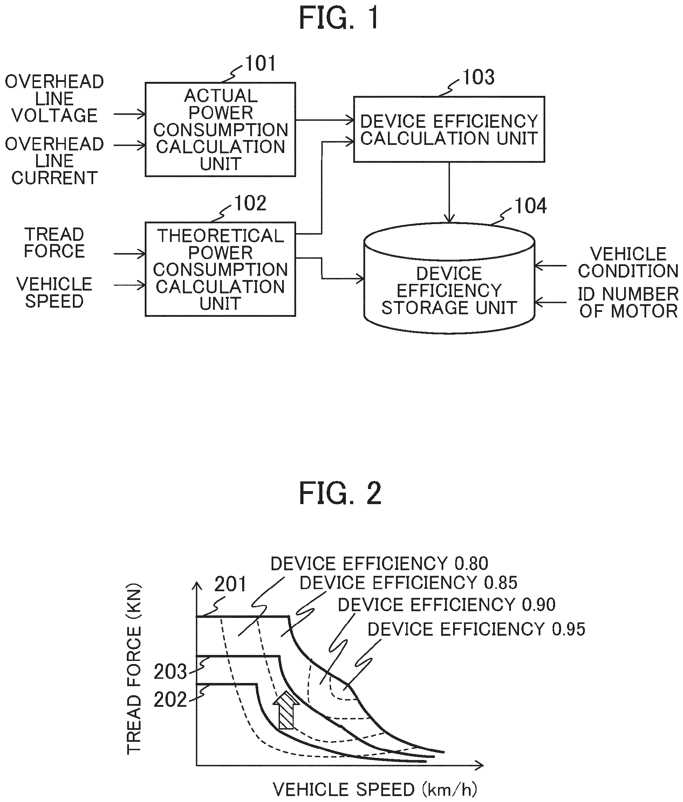

Fig. 1 is the diagram showing one example of a configuration of a vehicle information control system. The vehicle information control system calculates device efficiency in real time according to the configuration shown in Fig. 1. Specifically, the vehicle information control system includes: an actual power consumption calculation unit 101 for calculating an actual power consumption; a theoretical power consumption calculation unit 102 for calculating a theoretical power consumption on the basis of a theoretical equation; a device efficiency calculation unit 103 for calculating the device efficiency; and a device efficiency storage unit 104 for storing the device efficiency together with various vehicle conditions.

The actual power consumption calculation unit 101 uses, as input signals, an overhead line voltage $V_{line}$ and an overhead line current $I_{line}$, and calculates the actual power consumption $E_r$ from the two input signals on the basis of Equation (1).

$$E_r = I_{line} \times V_{line} \times \Delta t \qquad (1)$$

In Equation (1), $E_r$: actual power consumption [kW], $I_{line}$ : overhead line current [A], $V_{line}$: overhead line voltage [kV], and $\Delta t$: calculation cycle [s].

The actual power consumption calculation unit 101 outputs the calculated actual power consumption $E_r$ to the device efficiency calculation unit 103.

On the other hand, the theoretical power consumption calculation unit 102 uses, as input signals, a tread force F and a vehicle speed V, and calculates the theoretical power consumption $E_t$ from the two input signals on the basis of Equation (2). In this regard, the tread force F is a force which a wheel allows a surface of a rail to generate by the output from the drive device of the vehicle.

$$E_t = F \times V \times \Delta t \qquad (2)$$

In Equation (2), $E_t$: theoretical power consumption [kW], F: tread force outputted from the drive device [kN], V: vehicle speed [m/s], and $\Delta t$: calculation cycle [s].

For the tread force F to be used as an input signal, feedback data from the drive device may be utilized. Alternatively, a design value of a tread force that can be outputted may be calculated from a notch, an overhead line voltage or a vehicle mass, and utilized. The theoretical power consumption calculation unit 102 outputs the calculated theoretical power consumption $E_t$ to the device efficiency calculation unit 103, and outputs the tread force F and the vehicle speed V used for the calculation to the device efficiency storage unit 104.

The device efficiency calculation unit 103 uses, as input signals, the actual power consumption $E_r$ and the theoretical power consumption $E_t$, and calculates the device efficiency $\eta$ from the two input signals on the basis of Equation (3).

$$\eta = \frac{E_t}{E_r} \qquad (3)$$

In Equation (3), $\eta$: device efficiency, $E_r$: actual power consumption [kW], and $E_t$: theoretical power consumption [kW] .

The device efficiency calculation unit 103 outputs the calculated device efficiency $\eta$ to the device efficiency storage unit 104.

The device efficiency storage unit 104 stores the device efficiency $\eta$ inputted from the device efficiency calculation unit 103 together with the tread force F and the vehicle speed V inputted from the theoretical power consumption calculation unit 102. Furthermore, the device efficiency storage unit 104 also stores an ID number peculiar to a motor as well as vehicle conditions (for example, signals such as an overhead line voltage, running operation, a boarding rate, motor temperature, and hours of operation of the motor).

Next, a device efficiency map will be described. Fig. 2 is a diagram showing a concept of the device efficiency map. The horizontal axis on the device efficiency map represents the vehicle speed and the vertical axis represents the tread force. When referring to the device efficiency map, the corresponding device efficiency is read based on a current vehicle speed and a tread force outputted from the drive device . In the diagram, the characteristic shown by numeral 201 indicates a maximum tread force that a motor can output.

The energy saving control using the device efficiency map will be described. For example, when a train outputs a tread force shown by numeral 202 in Fig.2, an operation point of device efficiency 0.80 will be mainly used. In such a case, the tread force can be changed to the one shown by numeral 203 in the diagram by reducing the number of operating motors in the train or changing the running guidelines (for example, combination of notches) shown in Patent Literature 1, etc. Since the tread force shown by numeral 203 mainly uses an operation point of device efficiency 0.85, the device efficiency becomes higher than the device efficiency 0.80 of the operation point that the tread force shown by numeral 202 mainly uses. Therefore, an input power required to obtain the same output can be suppressed, and it becomes possible to reduce power consumption.

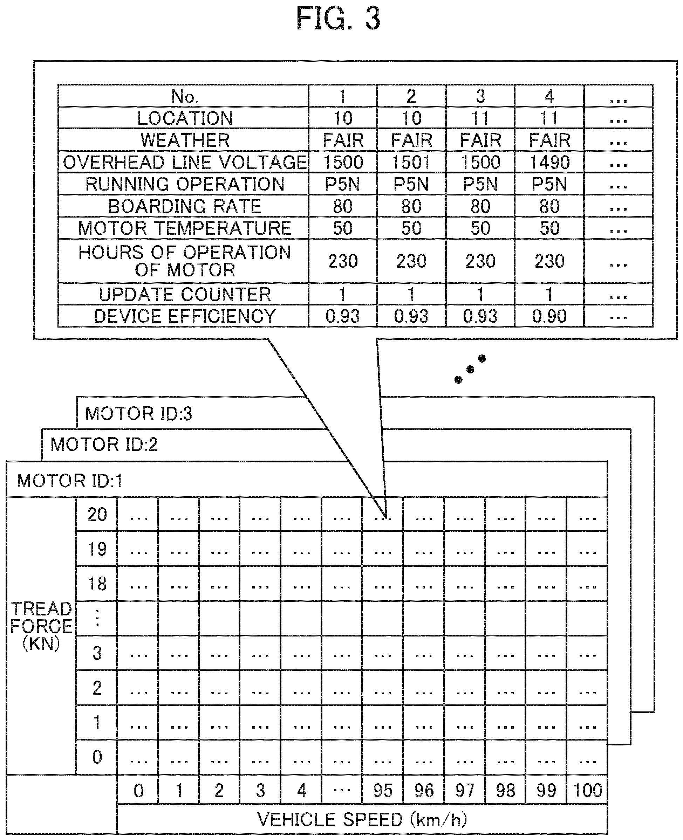

Next, the data held in the device efficiency storage unit 104 will be described. Fig. 3 is a diagram showing one example of a data format that the device efficiency storage unit 104 stores. As shown in the diagram, it is desirable that the data is held in a tabular form for each motor in a train (in Fig.3, for each motor ID). Alternatively, even if data is held as one table for a train, the function and effects by the present invention are maintained. However, the amount of data as a table becomes larger.

Specifically, as illustrated in Fig. 3, for data to be held, the vehicle speed (the horizontal axis) and the tread force (the vertical axis) are divided by a given width, and the data of the device efficiency is recorded for each value thereof. For example, in the case of the vehicle speed being every 1 km/h in the range between 0 and 100 km/h and the tread force being every 1 kN in the range between 0 and 20 kN, it means that the data of the device efficiency being $100 \times 20 = 2,000$ kinds are recorded in all.

The data of the device efficiency corresponding to the vehicle speed and the tread force inputted from the theoretical power consumption calculation unit 102 are constantly updated to the value from the device efficiency calculation unit 103, which are stored and held in the device efficiency storage unit 104. As for data of the device efficiency, the data may also be recorded together with values of various vehicle conditions when the device efficiency is calculated. For example, if there are ten kinds of vehicle conditions, the data being $2,000 \times 10 = 20,000$ pieces are recorded.

The kinds of vehicle conditions, for example, include information such as a location, weather, an overhead line voltage, running operation (a notch location in the diagram), a boarding rate, motor temperature, and hours of operation of the motor. For vehicle conditions, it is not limited to the above-described information, and as long as it is information which is influential to device efficiency, information other than the above may be added.

Further, a value of an update counter showing that the device efficiency is updated may be stored for each device efficiency. When updating the device efficiency of the conditions in which the vehicle speed, the tread force, and the vehicle condition match, the update counter is incremented. In order that the device efficiency may be updated promptly, it is desirable that the resolution of the vehicle conditions should be as coarse as possible. Moreover, in order to raise the precision, it is conceivable to divide by each vehicle condition. However, adoption thereof may be determined in consideration of the balance with the amount of data and calculation.

Here, when updating a device efficacy map, it is desirable to check soundness of a value of a device efficiency inputted from the device efficiency calculation unit 103. For example, when the device efficiency is larger than 1 or when it differs from a design value greatly, it is considered as an abnormal value and the device efficiency map is not updated. It is desirable that a differential value (threshold value) between the design value and the calculated device efficiency to be used for determination of the abnormal value can be set arbitrarily.

Further, when using the device efficiency map, it is determined that the data of the device efficiency in the case of the update counter being incremented can be used reliably. Therefore, in order to reduce, as much as possible, the data of the device efficiency of the update counter not being incremented, an instruction as follows may be given. That is, the instruction may be given to the drive system or a driver (on a screen etc.) to positively use a vehicle speed and a tread force corresponding to a section where data of the device efficiency of the update counter not being incremented exist in the data format shown in Fig. 3.

As described above, according to the embodiment of the present invention, the device efficiency map conforming to an actual environment can be created. Therefore, it becomes possible to change the operation point of the motor to raise the device efficiency and to achieve the expected energy-saving effect.

List of Reference Signs

101 Actual power consumption calculation unit
102 Theoretical power consumption calculation unit
103 Device efficiency calculation unit
104 Device efficiency storage unit

**Claims**

1. A vehicle information control device, comprising:

   an actual power consumption calculation unit for calculating, from an overhead line voltage and an overhead line current, an actual power consumption actually consumed by a vehicle;
   a theoretical power consumption calculation unit for calculating a theoretical power consumption of the vehicle from a tread force of the vehicle outputted by a drive device of the vehicle and a vehicle speed of the vehicle on the basis of a theoretical equation;
   a device efficiency calculation unit for calculating the device efficiency of the vehicle from the actual power consumption and the theoretical power consumption; and
   a device efficiency storage unit for storing the device efficiency.

2. A vehicle information control device according to claim 1,
   wherein the device efficiency calculation unit checks soundness of the calculated device efficiency and outputs only sound values to the device efficiency storage unit.

3. A vehicle information control device according to claim 1 or claim 2,
   wherein the device efficiency storage unit also stores various vehicle conditions of the vehicle at the time when the device efficiency calculation unit calculates the device efficiency.

4. A vehicle information control device according to any one of claims 1 to 3, wherein the device efficiency storage unit stores the device efficiency or the device efficiency and the various vehicle conditions for each motor mounted on the vehicle.

5. A vehicle information control device according to any one of claims 1 to 4,
   wherein the device efficiency calculation unit calculates the device efficiency from the actual power consumption and the theoretical power consumption calculated at the same time.

6. A vehicle information control device according to claim 5,
   wherein the device efficiency storage unit stores the device efficiency or the device efficiency and the various vehicle conditions for each range width made by dividing the vehicle speed and the tread force, respectively, by a given width.

7. A method of controlling vehicle information, comprising:

   a first step of calculating, from an overhead line voltage and an overhead line current, an actual power consumption actually consumed by a vehicle;
   a second step of calculating a theoretical power consumption of the vehicle from a tread force of the vehicle outputted by a drive device of the vehicle and a vehicle speed of the vehicle on the basis of a theoretical equation;
   a third step of calculating the device efficiency of the vehicle from the actual power consumption and the theoretical power consumption; and
   a fourth step of storing both the device efficiency and various vehicle conditions at the time of calculating device efficiency.

8. A method of controlling vehicle information according to claim 7, wherein soundness of the calculated device efficiency is checked, and only sound values are outputted in the third step.

# FIG. 1

| | |
|---|---|
| OVERHEAD LINE VOLTAGE → | 101 ACTUAL POWER CONSUMPTION CALCULATION UNIT |
| OVERHEAD LINE CURRENT → | |

103 DEVICE EFFICIENCY CALCULATION UNIT

| | |
|---|---|
| TREAD FORCE → | 102 THEORETICAL POWER CONSUMPTION CALCULATION UNIT |
| VEHICLE SPEED → | |

104 DEVICE EFFICIENCY STORAGE UNIT

← VEHICLE CONDITION

← ID NUMBER OF MOTOR

# FIG. 2

DEVICE EFFICIENCY 0.80
DEVICE EFFICIENCY 0.85
DEVICE EFFICIENCY 0.90
DEVICE EFFICIENCY 0.95

201
203
202

TREAD FORCE (KN)

VEHICLE SPEED (km/h)

7

# FIG. 3

| No. | 1 | 2 | 3 | 4 | ... |
|---|---|---|---|---|---|
| LOCATION | 10 | 10 | 11 | 11 | ... |
| WEATHER | FAIR | FAIR | FAIR | FAIR | ... |
| OVERHEAD LINE VOLTAGE | 1500 | 1501 | 1500 | 1490 | ... |
| RUNNING OPERATION | P5N | P5N | P5N | P5N | ... |
| BOARDING RATE | 80 | 80 | 80 | 80 | ... |
| MOTOR TEMPERATURE | 50 | 50 | 50 | 50 | ... |
| HOURS OF OPERATION OF MOTOR | 230 | 230 | 230 | 230 | ... |
| UPDATE COUNTER | 1 | 1 | 1 | 1 | ... |
| DEVICE EFFICIENCY | 0.93 | 0.93 | 0.93 | 0.90 | ... |

MOTOR ID:3

MOTOR ID:2

MOTOR ID:1

| TREAD FORCE (KN) | | | | | | | | | | | | | |
|---|---|---|---|---|---|---|---|---|---|---|---|---|---|
| 20 | ... | ... | ... | ... | ... | ... | ... | ... | ... | ... | ... | ... |
| 19 | ... | ... | ... | ... | ... | ... | ... | ... | ... | ... | ... | ... |
| 18 | ... | ... | ... | ... | ... | ... | ... | ... | ... | ... | ... | ... |
| ⋮ | | | | | | | | | | | | |
| 3 | ... | ... | ... | ... | ... | ... | ... | ... | ... | ... | ... | ... |
| 2 | ... | ... | ... | ... | ... | ... | ... | ... | ... | ... | ... | ... |
| 1 | ... | ... | ... | ... | ... | ... | ... | ... | ... | ... | ... | ... |
| 0 | ... | ... | ... | ... | ... | ... | ... | ... | ... | ... | ... | ... |
| | 0 | 1 | 2 | 3 | 4 | ... | 95 | 96 | 97 | 98 | 99 | 100 |

VEHICLE SPEED (km/h)

## INTERNATIONAL SEARCH REPORT

International application No.

PCT/JP2018/035668

### A. CLASSIFICATION OF SUBJECT MATTER
Int. Cl. B60L15/20(2006.01)i

According to International Patent Classification (IPC) or to both national classification and IPC

### B. FIELDS SEARCHED

Minimum documentation searched (classification system followed by classification symbols)
Int. Cl. B60L15/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2014-236547 A (HIGASHI NIPPON RYOKAKU TETSUDO) 15 December 2014, paragraphs [0021]-[0029] (Family: none) | 1-2, 4-6<br>3, 7-8 |
| Y<br>A | WO 2012/120681 A1 (PIONEER CORP.) 13 September 2012, paragraphs [0014]-[0030] & US 9045057 B2, column 4, line 29 to column 6, line 40 & EP 2685623 A1 | 1-2, 4-6<br>3, 7-8 |
| A | JP 2010-512267 A (GENERAL ELECTRIC CO.) 22 April 2010, paragraphs [0042]-[0044] & US 2007/0219682 A1, paragraphs [0055]-[0057] & WO 2008/073548 A2 & CA 2622344 A & BR PI0706035 A & AU 2007333518 A & RU 2008124977 A | 1-8 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>20.11.2018 | Date of mailing of the international search report<br>04.12.2018 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

**Patent documents cited in the description**

• JP 2010088145 A